# EUROPEAN PATENT APPLICATION

(11) **EP 2 594 863 A1**
(43) Date of publication of application: **22.05.2013**
(21) Application number: 11306527.0
(22) Date of filing: 21.11.2011
(51) Int. Cl.: F24J 2/07, F24J 2/24, F24J 2/16, F24J 2/46, F01K 13/00, F22B 1/00

(54) **Direct solar steam generator and method of shutting down a direct solar steam generator**

(71) Applicant: Areva Solar, Inc, Mountain View CA 94043 (US)
(72) Inventor: Tanner, Peter, Mountain View, CA 94043 (US)
(74) Representative: Blot, Philippe Robert Emile

(57) **Abstract**

The direct solar steam generator (2) is of the type comprising a solar evaporator (4) having an evaporator circuit (12) for circulation of a working fluid, an evaporator inlet pipe (8) for supplying fluid to the evaporator circuit (12) and an evaporator outlet pipe (10) for collecting the working fluid exiting the evaporator circuit (12), and a solar concentrator (6) for concentrating solar energy towards the evaporator circuit (12).

According to one aspect if the invention, the steam generator (2) comprises a fluid arrangement (26) configured to allow forming a static liquid seal in the outlet pipe (10) using the working fluid.

## Description

The present invention relates to a direct solar steam generator, of the type comprising a solar evaporator having an evaporator circuit for circulation of a working fluid, an evaporator inlet pipe for supplying fluid to the evaporator circuit and an evaporator outlet pipe for collecting the working fluid exiting the evaporator circuit, and a solar concentrator for concentrating solar energy towards the evaporator circuit.

During operation of the direct solar steam generator, the solar concentrator concentrates solar energy onto the evaporator, a working fluid in liquid state is fed to the inlet of the evaporator thus vaporizing at least part of the working fluid using the solar energy, and the steam is collected at the outlet of the evaporator. Steam outlets the evaporator at a high positive pressure that is a pressure higher than the atmospheric pressure.

During shutdown of the steam generator, e.g. overnight, the inlet and outlet of the evaporator are closed to fluidly isolate the evaporator from the reminder of a fluid circuit connected to the inlet and the outlet of the evaporator. Steam in the evaporator tends to cool down thus resulting in liquefaction of at least part of the working fluid. This in turn results in a pressure drop in the evaporator down to a negative pressure that is a pressure inferior to the atmospheric pressure.

Negative pressure in the evaporator raises the risk of air ingress into the evaporator due to leaks on flow control valves controlling fluid flow at inlet and outlet of the evaporator. Air ingress into the fluid circuit may have negative consequences on the efficiency and reliability of the solar steam generator.

A solution is maintaining a positive pressure in the evaporator during shutdown by feeding steam into the evaporator. This however results in significant energy losses and fluid accumulation in the steam generator.

Another solution is maintaining a positive pressure in the evaporator during shutdown by filling the evaporator with a neutral gas, e.g. nitrogen. This however requires the expensive of the nitrogen generation system and necessitates eliminating the nitrogen when restarting the system involving blowing out a significant amount of steam and energy. Further, this may not completely eliminate air ingress.

One of the objects of the invention is to propose a direct solar steam generator avoiding air ingress efficiently in a cost effective simple manner.

To this end, the invention proposes direct solar steam generator comprising a solar evaporator having an evaporator circuit for circulation of a working fluid, an evaporator inlet pipe for supplying fluid to the evaporator circuit and an evaporator outlet pipe for collecting the working fluid exiting the evaporator circuit, and a solar concentrator for concentrating solar energy towards the evaporator circuit, wherein the steam generator comprises a fluid arrangement configured to allow forming a static liquid seal in the outlet pipe using the working fluid.

According to other embodiments, the direct solar steam generator comprises one or several of the following features, taken in isolation or in any technically feasible combination:
- the fluid arrangement is configured for transferring fluid from inlet pipe to outlet pipe with by-passing the evaporator circuit;
- it comprises a by-pass pipe connecting the fluid inlet pipe to the steam outlet pipe with by-passing the evaporator circuit;
- it comprises at least one inlet valve for controlling fluid flow entering inlet pipe;
- the by-pass pipe connects the inlet pipe upstream each inlet valve;
- it comprises at least one outlet valve for controlling fluid flow exiting outlet pipe;
- the fluid arrangement is configured to allow creating a static fluid seal in the outlet pipe upstream the outlet valve;
- the by-pass pipe connects the outlet pipe upstream each outlet valve;
- the outlet pipe drops between evaporator circuit and each outlet valve;
- it comprises at least one by-pass valve for controlling flow fluid transferred from inlet pipe to outlet pipe.

The invention also relates to a solar power plant comprising at least one direct solar steam generator as defined above.

The invention further relates to a method of shutting down a direct solar steam generator of the type comprising a solar evaporator having an evaporator circuit, an evaporator inlet pipe and an evaporator outlet pipe and a solar concentrator for concentrating solar energy towards evaporator circuit, the method comprising the step of forming a static liquid seal in the outlet pipe during or after the shut down of the steam generator.

According to other embodiments, the method comprises one or several of the following features, taken in isolation or in any technically feasible combination:
- the step of forming a static liquid seal comprises transferring fluid from the inlet pipe to the outlet pipe with by-passing the evaporator circuit;
- it comprising closing the inlet pipe and closing the outlet pipe;
- working fluid is transferred from upstream an inlet valve closing the inlet pipe to upstream an outlet valve closing the outlet pipe.

The invention and further advantages will be better understood on reading the following description, given solely by way of non-limiting example, with reference to the appended drawings, in which:
- Figure 1 is a schematic perspective elevation view of a linear Fresnel direct solar steam generator according to the invention ; and
- Figures 2 and 3 are enlarged views of a fluid system for feeding fluid to an evaporator of the steam generator of Figure 1 and collecting steam from the evaporator during operation and during shutdown respectively.

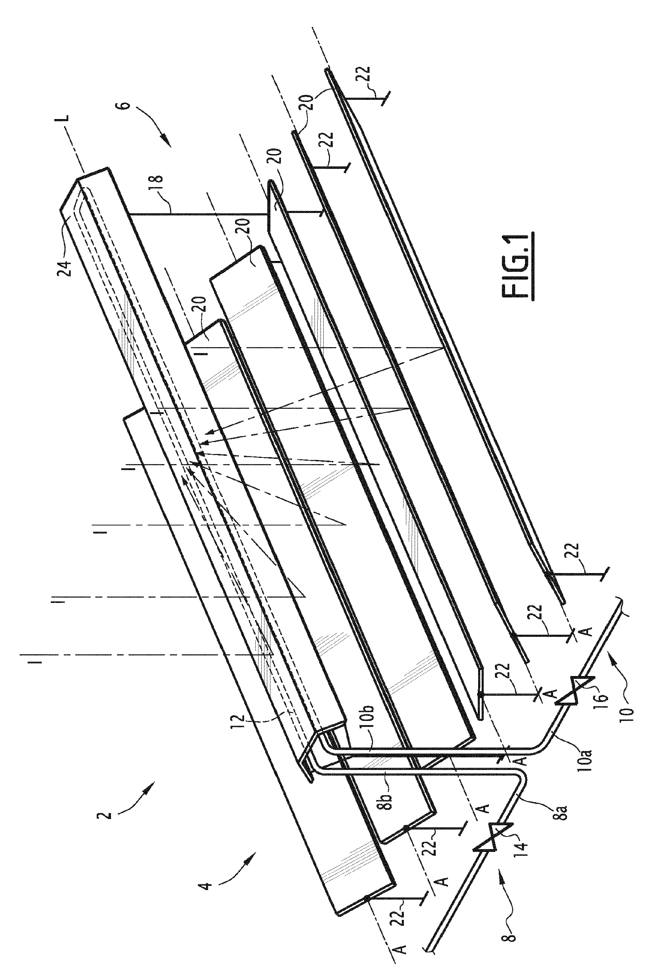

The direct solar steam generator 2 of Figure 1 comprises a solar evaporator 4 for evaporating fluid using solar energy and a primary solar concentrator 6 for concentrating solar energy towards the evaporator 4.

The solar evaporator 4 comprises an evaporator inlet pipe 8, an evaporator outlet pipe 10, an evaporator circuit 12 extending between the evaporator inlet pipe 8 and the evaporator outlet pipe 10, an evaporator inlet valve 14 for controlling fluid entering the solar evaporator 4 and an evaporator outlet valve 16 for controlling fluid exiting the solar evaporator 4.

The inlet pipe 8 is for supplying a working fluid - preferably water - in liquid state to the evaporator circuit 12. The evaporator circuit 12 is intended to be exposed to solar concentrated radiation from the primary solar concentrator 6 for evaporating the working fluid flowing through the evaporator circuit 12 using the solar energy. The outlet pipe 10 is for collecting steam exiting the evaporator circuit 12.

In the following, the terms "upstream" and "downstream" are used with reference to the flow of the working fluid successively from inlet pipe 8 to evaporator circuit 12 and to outlet pipe 10.

The evaporator circuit 12 is elongated and extends substantially horizontally in a longitudinal direction L. The inlet pipe 8 and the outlet pipe 10 are adjacent and located at a longitudinal end of the evaporator circuit 12.

The evaporator circuit 12 is mounted at a height above the ground on a support 18.

The inlet valve 14 is provided on the inlet pipe 8. In the illustrated example, the inlet pipe 8 rises between the inlet valve 14 and the evaporator circuit 12. More specifically, the inlet pipe 8 has an upstream bottom section 8a at or near ground level and a downstream rising section 8b rising upwardly from bottom section 8a to the evaporator circuit 12 and the inlet valve 14 is mounted on the bottom section 8a.

The outlet valve 16 is provided on the outlet pipe 10. In the illustrated example, the outlet pipe 10 drops between the evaporator circuit 12 and the outlet valve 16. More specifically, the outlet pipe 10 has a downstream bottom section 10a at or near ground level and an upstream dropping section 10b extending downwardly from the evaporator circuit 12 to the bottom section 10a and the outlet valve 16 is mounted on the bottom section 10a.

The bottom section 8a of the inlet pipe 8 and the bottom section 10a of the outlet pipe 10 are substantially at the same level, e.g. at ground level or near ground level.

The upstream end of the inlet pipe 8 is connected to a supply circuit supplying fluid in liquid state. The inlet valve 14 controls the working fluid flow entering the inlet pipe 8.

The downstream end of the outlet pipe 10 is connected to a steam circuit collecting steam from one or several steam generators. The outlet valve 16 controls the working fluid flow exiting the outlet pipe 10.

The evaporator circuit 12 illustrated on Figure 1 may be a two pass evaporator: the fluid passes twice in the concentrated solar beam. In alternative embodiments, the evaporator is a single pass or multi-pass evaporator.

The evaporator circuit 12 illustrated in Figure 1 is a single tube evaporator. In alternative embodiments, the evaporator 4 is a multi-tube evaporator comprising several tubes in parallel.

The primary solar concentrator 6 is a linear Fresnel concentrator. The solar concentrator 6 comprises a plurality of longitudinally elongated reflectors 20 arranged side-by-side. Each reflector 20 is mounted in rotation about a respective longitudinal axis A for tracking the sun's motion during the day.

The primary solar concentrator 6 conventionally comprises a drive system for driving the reflectors 20 depending on the position of the sun, such that each reflector 20 deflect incident solar beam towards the solar evaporator 4.

The solar concentrator 6 is placed below the evaporator 4 to reflect and concentrate sun beams upwardly towards the evaporator circuit 12 of the evaporator 4.

Optionally, the steam generator 2 comprises a secondary solar concentrator 24 placed above the evaporation circuit 12 for collecting and reflecting solar beam reflected by the primary solar concentrator 6 towards the evaporator circuit 12 of the solar evaporator 4.

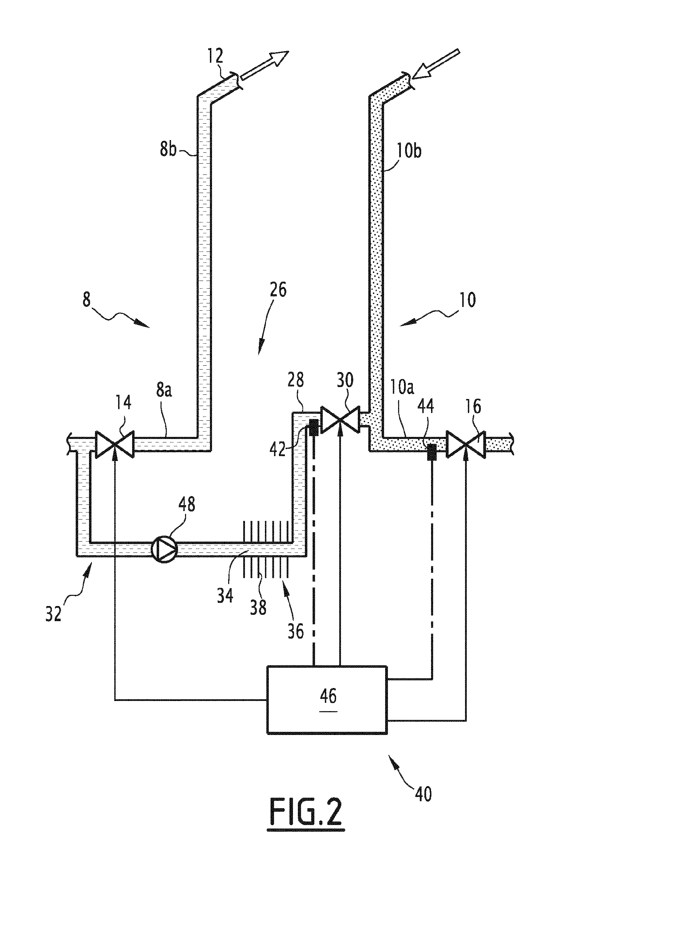

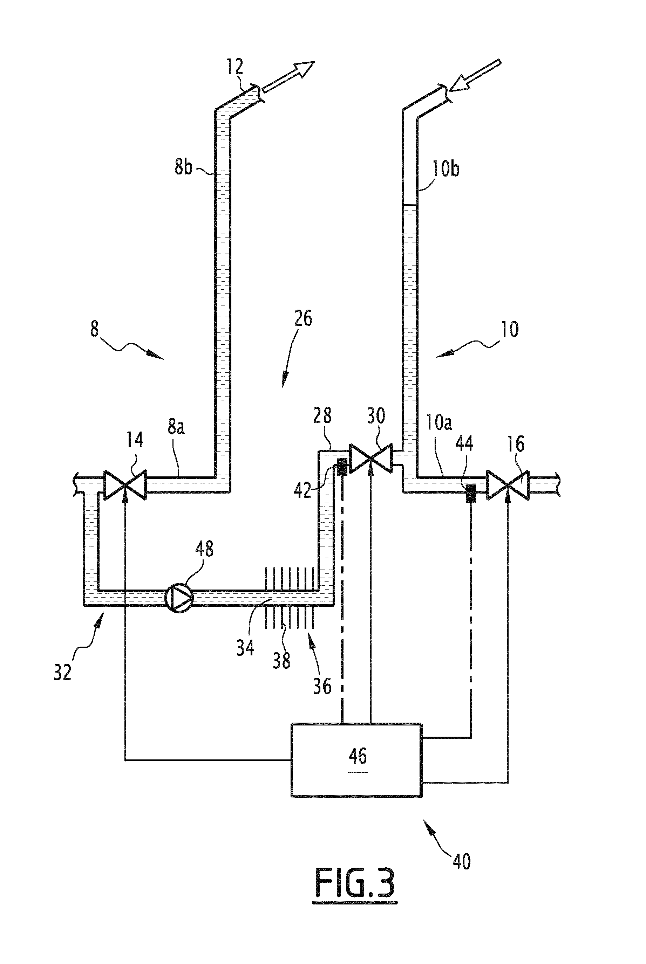

As illustrated on Figures 2 and 3, the steam generator 2 further comprises a fluid arrangement 26 for transferring fluid in liquid state from inlet pipe 8 to outlet pipe 10 with by-passing the evaporation circuit 12 and allowing to create a static liquid seal in the outlet pipe 10, namely upon shutdown of the evaporator 4.

The fluid arrangement 26 comprises a by-pass pipe 28 connecting the inlet pipe 8 to the outlet pipe 10 with by-passing the evaporation circuit 12 and a by-pass valve 30 for controlling fluid flow in the by-pass pipe 28.

The by-pass pipe 28 connects the inlet pipe 8 upstream the inlet valve 14. The by-pass pipe 28 connects the outlet pipe 10 upstream the outlet valve 16.

The by-pass pipe 28 comprises a U-bend 32 with an intermediate section 34 offset downwardly from connections of the by-pass pipe 28 to the inlet pipe 8 and the outlet pipe 10. The U-bend substantially reduces thermal losses from the by-pass pipe 28 when the steam generator is operating.

The by-pass valve 30 is located between the U-bend 32 and the outlet pipe 10. This valve provides a means for filing the outlet pipe with working fluid in liquid state when the steam generator is not operating.

The fluid arrangement 26 comprises a cooling device 36 for cooling fluid flowing in the by-pass pipe 28. The cooling device will bring fluid temperatures below the liquid saturation temperature in the outlet pipe to prevent flashing service across the by-pass valve 30.

The cooling device 36 illustrated on Figures 2 and 3 is passive. It comprises cooling fines 38 provided on the external surface of U-bend 32. Alternatively or optionally, the cooling device 36 comprises active cooling means. Active cooling means may comprise a ventilator for forcing air around the by-pass pipe 28.

The steam generator 2 comprises a control device 40 for controlling the inlet valve 14, the outlet valve 16 and the by-pass valve 30.

The control device 40 comprises a temperature sensor 42 for sensing temperature of the fluid in the by-pass pipe 28 upstream of the by-pass valve 30, a pressure sensor 44 for sensing pressure in the fluid in the inlet pipe 28 and a control unit 46 for controlling the inlet valve 14, the outlet valve 16 and the by-pass valve 30 as a function of the measures delivered by the sensors 42, 44.

The by-pass pipe 28 is arranged to allow a transfer of fluid in liquid state by gravity from the inlet pipe 8 to the outlet pipe 10 when the by-pass valve 30 is opened. Alternatively or optionally, the fluid arrangement 26 comprises a pump 48 provided on the by-pass pipe 28 to force fluid to circulate in the by-pass pipe 28 from the end connected to the inlet pipe 8 towards the end connected to the outlet pipe 10.

The operation of the steam generator 2 will be described with reference to Figure 2 and 3 illustrating the steam generator 2 during operation and during shutdown respectively.

During operation (Figure 2), the inlet valve 14 and the outlet valve 16 are opened and the by-pass valve 30 is closed. Fluid is taken in supply circuit and supplied to evaporator inlet pipe 8 and steam is collected at evaporator outlet pipe 10 and delivered to steam circuit by outlet pipe 10.

During shutdown (Figure 3), the inlet valve 14 and the outlet valve 16 are closed. During or after the shutdown the by-pass valve 30 is opened. Upon opening of the by-pass valve 30, fluid in liquid state present in the inlet pipe 8 is transferred by pump pressure or gravity through by-pass line 28 into both lower portions of inlet pipe 8 and outlet pipe 10.

This result in a liquid seal formed in the outlet pipe 10 upstream the outlet valve 16. The liquid also seals the outlet valve 16 and prevents air ingress into this valve.

Accordingly, a method of shutting down the steam generator 2 comprises the steps of closing the inlet valve 14 of the inlet pipe 8 and closing the outlet valve 16 of the outlet pipe 10 and transferring fluid in liquid state from inlet pipe 8 to outlet pipe 10 to create static liquid seal in the outlet pipe 10 upstream the outlet valve 16.

Preferably, the method provides collecting fluid in liquid state in the inlet pipe 8 upstream the inlet valve 14 and transferring the fluid in liquid state to the outlet pipe 10 upstream the outlet valve 16.

In a preferred embodiment, by-pass valve 30 is opened when pressure in the outlet pipe 10 is below a pressure threshold and when fluid temperature measured in the by-pass pipe 28 is below a temperature threshold. The pressure threshold is for example 1.3 bars and the temperature threshold is for example 100 C°.

The invention allows isolating the evaporator with efficiently preventing air ingress in a simple cost effective manner by providing simple and reliable piping means forming a by-pass between evaporator inlet and evaporator outlet.

The invention applies in particular to linear Fresnel direct solar steam generator and in a more general manner to a direct solar steam generator. It applies e.g. also to direct solar steam generator comprising solar concentrator in the form of cylindro-parabolic reflectors.

## Claims

1. Direct solar steam generator (2), of the type comprising a solar evaporator (4) having an evaporator circuit (12) for circulation of a working fluid, an evaporator inlet pipe (8) for supplying fluid to the evaporator circuit (12) and an evaporator outlet pipe (10) for collecting the working fluid exiting the evaporator circuit (12), and a solar concentrator (6) for concentrating solar energy towards the evaporator circuit (12), wherein the steam generator (2) comprises a fluid arrangement (26) configured to allow forming a static liquid seal in the outlet pipe (10) using the working fluid.

2. Direct solar steam generator (2) according to claim 1, wherein the fluid arrangement (26) is configured for transferring fluid from inlet pipe (8) to outlet pipe (10) with by-passing the evaporator circuit (12).

3. Direct solar steam generator (2) according to claim 1 or 2, comprising a by-pass pipe (28) connecting the fluid inlet pipe (8) to the steam outlet pipe (10) with by-passing the evaporator circuit (12).

4. Direct solar steam generator (2) according to claim 3, comprising at least one inlet valve (14) for controlling fluid flow entering inlet pipe (8).

5. Direct solar steam generator (2) according to claim 3 or 4, wherein the by-pass pipe (28) connects the inlet pipe (8) upstream each inlet valve (14).

6. Direct solar steam generator (2) according to any one of claims 3 - 5, comprising at least one outlet valve (16) for controlling fluid flow exiting outlet pipe (10).

7. Direct solar steam generator (2) according to claim 6, wherein the fluid arrangement is configured to allow creating a static liquid seal upstream a outlet valve.

8. Direct solar steam generator (2) according to claim 6 or 7, wherein the by-pass pipe (28) connects the outlet pipe (10) upstream each outlet valve (16).

9. Direct solar steam generator (2) according to any one of claim 6 - 8, wherein the outlet pipe (10) drops between evaporator circuit (12) and each outlet valve (16).

10. Direct solar steam generator (2) according to any one of claims 2 - 9, comprising at least one by-pass valve (30) for controlling flow fluid transferred from inlet pipe (8) to outlet pipe (10).

11. Solar power plant comprising at least one direct solar steam generator (2) according to anyone of claims 1 - 10.

12. Method of shutting down a direct solar steam generator (2) of the type comprising a solar evaporator (4) having an evaporator circuit (12), an evaporator inlet pipe (8) and an evaporator outlet pipe (10) and a solar concentrator (6) for concentrating solar energy towards evaporator circuit (12), the method comprising the step of forming a static liquid seal in the outlet pipe (10) during or after the shut down of the steam generator (2).

13. Method according to claim 12, wherein the step of forming a static liquid seal comprises transferring fluid from the inlet pipe (8) to the outlet pipe (10) with by-passing the evaporator circuit (12).

14. Method according to claim 12 or 13, comprising closing the inlet pipe (8) and closing the outlet pipe (10).

15. Method according to anyone of claims 14, wherein fluid is transferred from upstream an inlet valve (14) closing the inlet pipe (14) to upstream an outlet valve (16) closing the outlet pipe (10).
